# NEUE EUROPÄISCHE PATENTSCHRIFT

(11) **EP 0 588 781 B2**
(45) Veröffentlichungstag und Bekanntmachung des Hinweises auf die Entscheidung über den Einspruch: **26.01.2000**
(45) Hinweis auf die Patenterteilung: 27.09.1995
(21) Anmeldenummer: 93890172.5
(22) Anmeldetag: 06.09.1993
(51) Int. Cl.: B60C 11/04, B60C 11/03

(54) **Fahrzeugreifen**
Vehicle tyre
Bandage pneumatique pour véhicule

(30) Priorität: 15.09.1992 AT 183492
(43) Veröffentlichungstag der Anmeldung: 23.03.1994
(73) Patentinhaber: Semperit Reifen Aktiengesellschaft, A-2514 Traiskirchen (AT)
(72) Erfinder: Pawlek, Peter, Mag., A-2500 Baden (AT)
(74) Vertreter: Vinazzer, Edith, Dipl.-Ing.

(56) Entgegenhaltungen:
- EP-A- 0 371 788
- EP-A- 0 438 319
- EP-A- 0 493 063
- DE-A- 3 707 953
- DE-U- 9 002 986
- DE-U- 9 016 455
- JP-A- 1 282 005
- JP-A- 5 777 206
- JP-A- 6 361 606
- JP-A- 57 182 503
- JP-A- 58 167 207
- JP-U- 6 016 602
- US-A- 4 362 201
- US-A- 4 387 754
- US-A- 4 785 863
- JP Design patents 529105, 471541-4, 600446, 684403, 745374-1, 804996, 812785, 812785-1 and 822191.

## Beschreibung

Die Erfindung betrifft einen Fahrzeugreifen, gemäß dem Oberbegriff des Anspruchs 1. Wie z.B. durch die EP-A-0 371 788 bekannt ist.

Gerade bei PKW-Reifen, die für höhere Geschwindigkeiten geeignet sein sollen, ist es wichtig, daß die wesentlichen Profileigenschaften, wie sehr gutes Drainagevermögen, exakte Lenkbarkeit und hoher Fahrkomfort möglichst ausgewogen gegeben sind. Ein Reifen mit einem ahnlichen Laufflächenprofil ist beispielsweise aus der EP-A 0438319 bekannt. Dabei handelt es sich um ein sogenanntes unidirektional bzw. laufrichtungsgebundenes Profil, welches eine entlang der Äquatorlinie des Reifens angeordnete Umfangsrippe, seitlich dieser Umfangsrippe zwei breite Umfangsrillen und in den beiden Seitenbereichen jeweils auch eine breite, jedoch leicht zick-zack-förmig gestaltete Umfangsrille aufweist. Eine weitere Gliederung des Laufflächenprofiles erfolgt durch in jedem Seitenbereich vorgesehene geneigte Rillen, die das für derartige Reifen typische V-Profil ergeben.

Ein weiterer Reifen gemäß JP-S-745 374-1 zeigt einen Mittelabschnitt mit Umfangsnuten und von diesen beidseitig ausgehenden sacknutartigen Rillen

Der vorliegenden Erfindung liegt nun die Aufgabe zu Grunde, einen für höhere Fahrgeschwindigkeiten geeigneten Reifen zu schaffen, dessen Laufflächenprofil ein verbessertes Drainagevermögen und sehr gute Handlingseigenschaften aufweist.

Gelöst wird die gestellte Aufgabe erfindungsgemäß durch die Merkmalskombination des Anspruchs 1.

Mit den genannten Maßnahmen wird ein Laufflächenprofil geschaffen, welches insbesondere durch die ausschließlich im Mittelabschnitt verlaufenden Umfangsnuten und die dort vorgesehenen geneigten Rillen ein sehr gutes Drainagevermögen gewährleistet. Die in den beiden Seitenbereichen laufflächeninnenseitig als Sacknuten gestalteten bzw. endenden geneigten Rillen tragen ebenfalls zu einer Verbesserung der Drainagewirkung bei und wirken sich auf die Handlingseigenschaften des Reifens insbesondere dadurch günstig aus, daß laufflächeninnenseitig in diesen Bereichen die Stabilität durch zusammenhängende Profilbereiche erhöht ist.

Dabei ist es von Vorteil, wenn die Breite des Mittelabschnittes zwischen 30 und 50 %, der Laufflächenbreite beträgt.

Bei einer ersten Ausführungsvariante der Erfindung ist im Mittelabschnitt eine einzige Umfangsrippe angeordnet, die vorzugsweise mittig mit einer relativ schmalen und bis zu 4 mm tiefen Umfangsrille versehen ist. Durch diese Maßnahme kann die Stabilität der Mittelrippe günstig beeinflußt werden.

Bei einer weiteren Ausführungsform der Erfindung sind im Mittelabschnitt zwei, durch eine entlang der Äquatorlinie verlaufende breite Umfangsnut voneinander getrennte Umfangsrippen vorgesehen.

Ist im Mittelabschnitt eine einzige Umfangsrippe vorgesehen, so beträgt nach einem weiteren Merkmal der Erfindung der Normalabstand der geschlossenen Endbereiche der geneigten Rillen von der Umfangsrippenmittellinie 0,1 bis 0,3 W, insbesondere etwa 0,20 W, wobei W die axiale Breite der Umfangsrippe ist. Bei einer Ausführungsform, wo im Mittelabschnitt zwei Umfangsrippen vorgesehen sind, ist es günstig, wenn der Abstand zwischen den geschlossenen Endbereichen der geneigten Rillen und der mittleren Umfangsnut 0,2 bis 0,6 W'', insbesondere etwa 0,4 W'', gewählt wird, wobei W'' die Breite einer der Umfangsrippen ist.

In den beiden Seitenbereichen soll aus Stabilitätsgründen der Normalabstand zwischen den geschlossenen Endbereichen der geneigten Rillen und der jeweils benachbarten Umfangsnut in einem Bereich zwischen 0,07 und 0,3 W', insbesondere zwischen 0,09 und 0,2 W' gewählt werden, wobei W' die Breite der Seitenbereiche ist.

Es können nun sämtliche geneigte Rillen zumindest eine, insbesondere bis zu drei, Knickstelle(n) aufweisen, wobei die zwischen diesen Knickstellen verlaufenden Abschnitte der geneigten Rillen bevorzugt im wesentlichen als gerade Abschnitte gestaltet sind. Bei einer weiteren Ausführungsform der Erfindung sind sämtliche geneigte Rillen mit einer kontinuierlichen Bogenform versehen.

Die Anordnung der geneigten Rillen erfolgt bevorzugt derart, daß ein, bezüglich der Umfangsmittellinie betrachtet, gepfeiltes und somit laufrichtungsgebundenes Laufflächenprofil gebildet wird.

Auf das Drainagevermögen wirkt es sich ferner günstig aus, wenn die profilinnenseitig verlaufenden Endbereiche der in der bzw. den Umfangsrippe(n) verlaufenden geneigten Rillen mit der Umfangsmittellinie Winkel einschließen, die zwischen 10 und 50°, insbesondere zwischen 15 und 40° betragen. Dabei ist es auch vorteilhaft, wenn die profilinnenseitig verlaufenden Endbereiche der in den Seitenbereichen angeordneten geneigten Rillen mit der Umfangsmittellinie Winkel einschließen, die zwischen 5° und 50°, insbesondere zwischen 15° und 35°, betragen.

Aus Geräuschgründen sollen die Winkel der geneigten Rillen bei ein und demselben Laufflächenprofil über den Reifenumfang variiert werden.

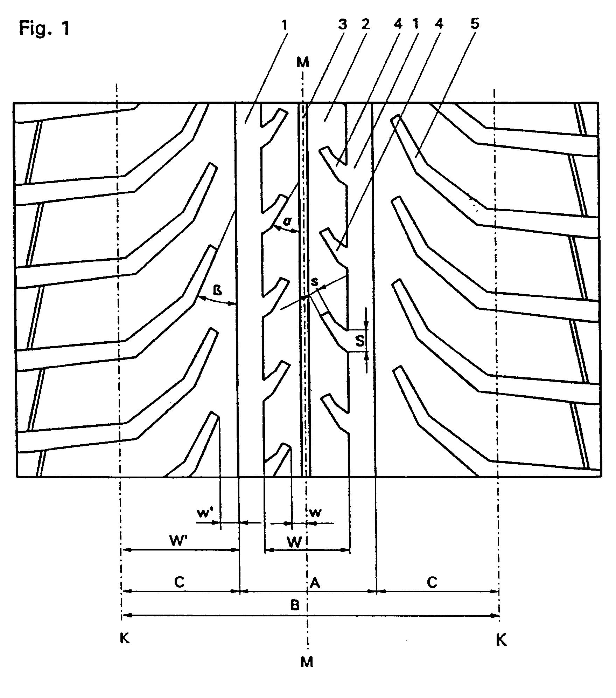

Weitere Merkmale, Vorteile und Einzelheiten der Erfindung werden nun anhand der Zeichnung, die mehrere Ausführungsbeispiele darstellt, näher beschrieben. Dabei zeigen die Fig. 1 bis 5 sowie Fig. 2a und 5a jeweils Teildraufsichten auf Abwicklungen von unterschiedlichen Varianten von Laufflächenprofilen nach der Erfindung.

In Fig. 1 ist mit B die maximale Breite der Lauffläche im Bodenaufstandsbereich des Reifens bezeichnet, die statisch ermittelt wird, wobei der Reifen auf seiner spezifizierten Felge aufgebracht ist, unter seinen spezifizierten Innendruck gesetzt ist und seiner Nennlast ausgesetzt ist. Die zugehörigen Spezifikationen werden entweder vom Reifenhersteller bekanntgegeben oder entsprechen einem Industriestandard, beispielsweise dem Standard der E.T.R.T.O, Die zur Breite B jeweils zugehörige Seitenkante ist mit k bezeichnet.

Die Lauffläche ist über ihre Breite B in einen Mittelabschnitt A und in zwei Seitenabschnitte C gegliedert. Der Mittelabschnitt, der im vorliegenden Ausführungsbeispiel symmetrisch zur Äquatorlinie M-M angeordnet ist, umfaßt zwei insbesondere 8 bis 10 mm breite und gerade verlaufende Umfangsnuten 1 und eine zwischen diesen verlaufende Umfangsrippe 2. Der Mittelabschnitt A nimmt beim vorliegenden Ausführungsbeispiel ca. 38 % der Laufflächenbreite B ein, seine Breite kann jedoch in einem Bereich, der zwischen 30 und 50 % B beträgt, gewählt werden. Die Mittelrippe ist mittig mit einer ca. 2 bis 3 mm schmalen und bis zu 4 mm tiefen Umfangsrille 3 versehen, die aus Stabilitätsgründen angebracht ist. Auf diese Umfangsrille 3 kann auch verzichtet werden. In der Mittelrippe 2 verlaufen geneigte Rillen 4, die als eine Knickstelle aufweisende und jeweils in eine der Umfangsnuten 1 mündende Sacknuten gestaltet sind. Die geneigten Rillen 4 haben dabei zu den Umfangsnuten 1 eine Mündungsbreite S die größer ist als ihre Breite s im Bereich des anderen Endes. Dabei beträgt S das 2 bis 4-fache von s. Die geschlossenen Endbereiche der geneigten Rillen 4 schließen mit der Äquatorlinie M-M Winkel α ein, die im Bereich zwischen 10 und 50 Grad, insbesondere zwischen 15 und 40 Grad betragen, wobei dieser Winkel aus Gründen der Minimierung des Abrollgeräusches bei ein und denselben Laufflächenprofil in diesen Bereichen variiert wird. Die geneigten Rillen 4 ragen in die Umfangsrippe 2 so weit hinein, daß ihr Normalabstand w von der Rippenmittellinie M-M 0,1 bis 0,3 x W, insbesondere 0,20 W beträgt, wobei W die Breite der Umfangsrippe 2 ist.

In den Seitenbereichen C der Lauffläche sind keine weiteren Umfangsnuten angeordnet, sondern ausschließlich geneigte Rillen 5, die zweifach abgeknickt sind, derart, daß ihr Einmündungswinkel an den Seitenkanten der Lauffläche relativ zur Äquatorlinie M-M zwischen 80 und 90 Grad beträgt. Auch die geneigten Rillen 5 sind Sacknuten und münden somit nicht in die breiten Umfangsnuten 1. Die Abschnitte an den geschlossenen Endbereichen der geneigten Rillen 5 bilden mit der Äquatorlinie M-M Winkel β die zwischen 5 und 50 Grad, insbesondere zwischen 15 und 35 Grad betragen können. Auch die Winkel β variieren bei ein und demselben Laufflächenprofil, somit auch die Mündungswinkel an den Laufflächenkanten und die Winkel der zwischen den Knickstellen liegenden Abschnitte dieser geneigten Rillen 5.

Die geneigten Rillen 5 werden zu den Seitenkanten des Profiles zu breiter, wobei die Breitenänderung vorzugsweise kontinuierlich erfolgt.

Der Normalabstand w' zwischen dem meridional inneren Enden der geneigten Rillen 5 und der jeweils benachbarten Umfangsnut 1 beträgt zwischen 0,07 und 0,30 W', insbesondere zwischen 0,09 und 0,2 W', wobei W' die axiale Breite der Seitenbereiche C ist.

Die Anordnung der geneigten Rillen 4 und 5 erfolgt pro Laufflächenhälfte gleichsinnig und über die Laufflächenbreite B betrachtet derart, daß ein laufrichtungsgebundenes, gepfeiltes Profil gebildet wird.

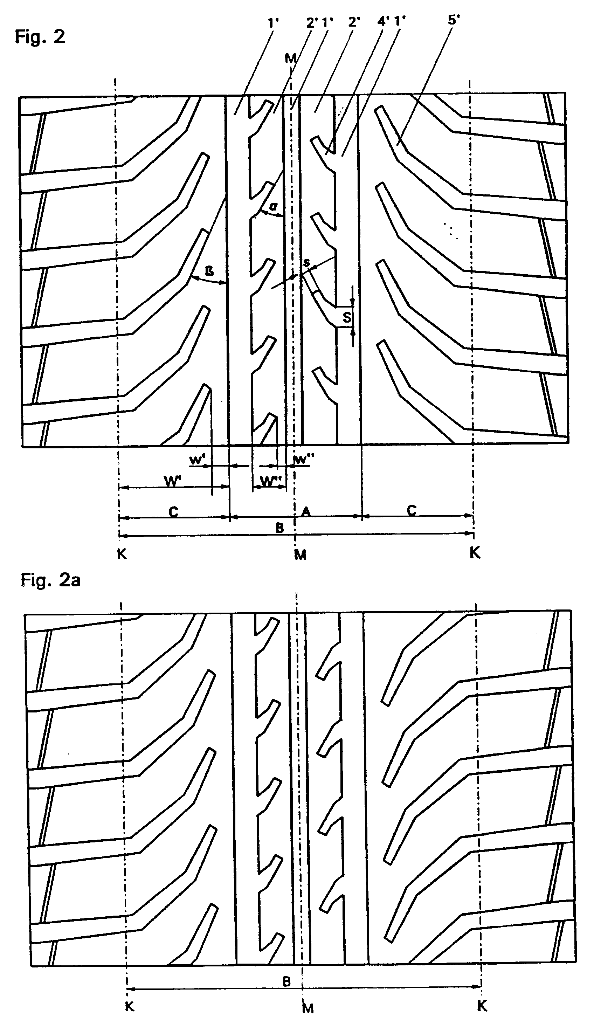

Bei dem in Fig. 2 dargestellten Ausführungsbeispiel sind im Mittelabschnitt A zwei Umfangsrippen 2', und somit drei Umfangsnuten 1', von welchen eine entlang der Äquatorlinie M-M verläuft, angeordnet. Die Breite des Mittelabschnittes A beträgt bei diesem Ausführungsbeispiel ca. 40 % der Laufflächenbreite B, kann jedoch, wie schon beim Ausführungsbeispiel gemäß Fig. 1 beschrieben, in einem Bereich, der dem dort bereits angegebenen entspricht, variiert werden. In jede Umfangsrippe 2' ragen von den Umfangsnuten 1' ausgehend als Sacknuten gestaltete geneigte Rillen 4', deren Normalabstand w'' zur mittleren Umfangsnut 1' 0,2 bis 0,6 W'' beträgt, wobei W'' die Breite Umfangsrippe 2' ist. In den Seitenbereichen sind geneigte Rillen 5' vorgesehen, die, wie auch die sonstige Ausgestaltung, gemäß dem Ausführungsbeispiel nach Fig. 1 ausgeführt sind.

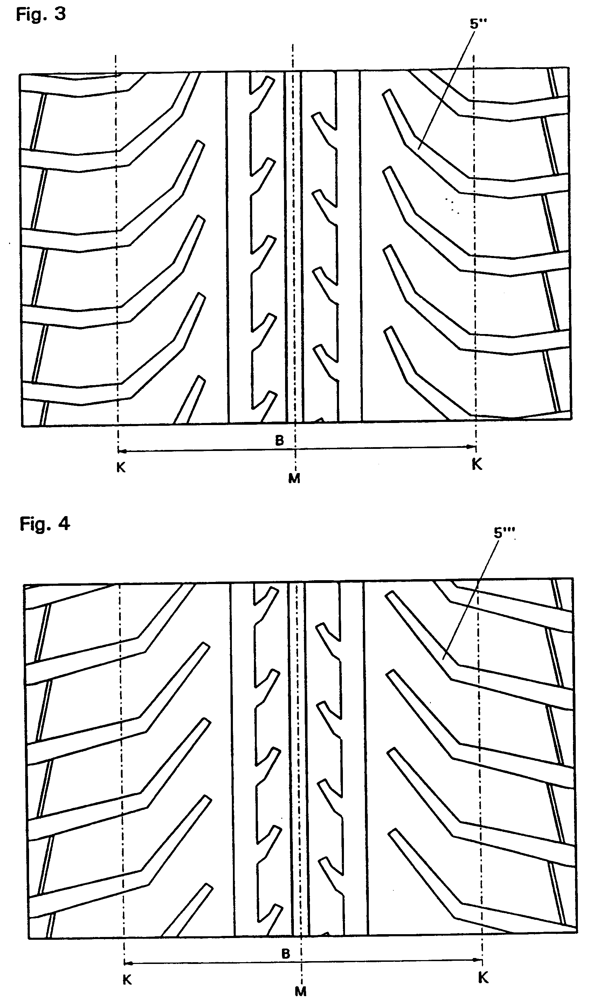

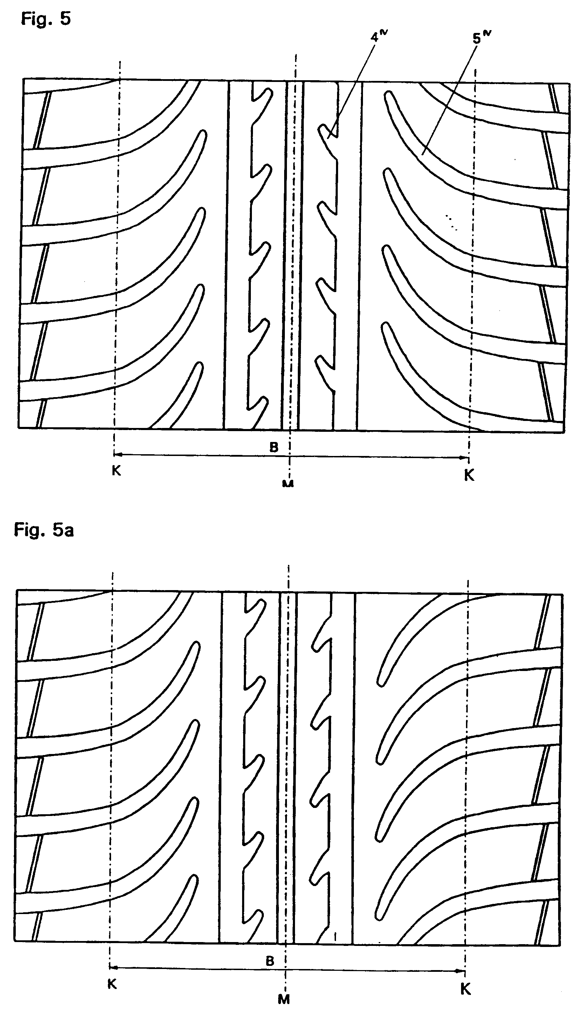

Fig. 2a zeigt eine Abwandlung des Ausführungsbeispieles gemäß Fig. 2, mit dem Unterschied, daß diese Variante nicht laufrichtungsgebunden gestaltet ist. Weitere Varianten des in Fig. 2 dargestellten Laufflächenprofiles sind in den Figuren 3 und 4 enthalten. Im folgenden werden lediglich die Unterschiede zu dem in Fig. 2 veranschaulichten Laufflächenprofil kurz beschrieben. Bei der Ausführungsform nach Fig. 3 sind die geneigten Rillen 5'' in den beiden Seitenbereichen der Lauffläche dreifach abgeknickt, derart, daß der außerhalb der Seitenkanten k verlaufende Abschnitt der geneigten Rillen 5'' leicht gegensinnig zu dem am weitesten laufflächeninnenseitig gelegenen Abschnitt verläuft. Bei dem in Fig. 4 dargestellten Ausführungsbeispiel sind die geneigten Rillen 5''' mit einer einzigen Knickstelle versehen.

Fig. 5 zeigt ein Ausführungsbeispiel, bei dem sowohl die geneigten Rillen 5^{IV} als auch die geneigten Rillen 4^{IV} bogenförmig gekrümmt verlaufen und keinerlei Knickstellen haben. Fig. 5a zeigt eine nicht laufrichtungsgebundene Variante des in Fig. 5 dargestellten Profiles.

Es wird nochmals darauf hingewiesen, daß ein gemäß der Erfindung gestaltetes Profil sowohl in laufrichtungsgebundener, gepfeilter Form gestaltet sein kann, als auch in einer nicht laufrichtungsgebunden Variante ausgeführt werden kann. Es können ferner geneigte Rillen in unterschiedlichen Ausgestaltungen bei ein und demselben Profil kombiniert werden.

Es ist ferner möglich, bei sämtlichen Varianten Kombinationen der geneigten Rillen und Umfangsnuten mit Lamellenfeineinschnitten vorzunehmen. So ist es insbesondere möglich, die geneigten Rillen, und zwar sowohl jene, die im Mittelabschnitt, als auch jene, die in den Seitenbereichen verlaufen, an einer oder mehreren Stellen durch Lammellenfeineinschnitte jeweils untereinander zu verbinden. Denkbar ist auch eine Ausgestaltung, wo zwischen den sacknutartigen Endbereichen der geneigten Rillen und der jeweils benachbarten Umfangsnut ein Feineinschnitt angeordnet wird. Dabei wird unter Feineinschnitt eine schmale, ca. 0,3 bis 1 mm breite Rille verstanden.

## Patentansprüche

1. Fahrzeugreifen, insbesondere Reifen in Radialbauart, mit einem Laufflächenprofil, welches sich aus einem Mittelabschnitt (A), der zwei breite gerade Umfangsnuten (1, 1'), an welche axial innenseitig zumindest eine Umfangsgrippe (2, 2') anschließt, aufweist und beidseitig begrenzt und aus zwei von Umfangsnuten freien Seitenbereichen (C) zusammensetzt, wobei die Seitenbereiche (C) als einzige Rillen eine Vielzahl von zur Reifenumfangsrichtung geneigten und über die Laufflächenprofilränder hinaus verlaufenden Rillen (5, 5', 5'', 5''' 5^{IV}) aufweist, die axial innenseitig als Sacknuten enden, und wobei auch in der bzw. den Umfangsrippen (2, 2') zur Reifenumfangsrichtung geneigte Ritten (4, 4' 4^{IV}) angeordnet sind, die axial außenseitig in die Umfangsnuten (1,1') einmünden und axial innenseitig als Sacknuten enden, dadurch gekennzeichnet, daß der Mittelabschnitt (A) eine Breite zwischen 30 und 50 % der Laufstreifenbreite (B) aufweist, und daß die Neigungsrichtung der Ritten (5, 5', 5'', 5''', 5^{IV}) in jedem Seitenbereich (C) mit der Neigungsrichtung der Ritten (4, 4', 4^{IV}) in der diesem Seitenbereich (C) benachbarten Umfangsrippe (2,2') übereinstimmt.

2. Fahrzeugreifen nach Anspruch 1, dadurch gekennzeichnet, daß im Mittelabschnitt (A) eine einzige Umfangsrippe (2) angeordnet ist, die vorzugsweise mittig mit einer relativ schmalen und bis zu 4 mm tiefen Umfangsrille (3) versehen ist.

3. Fahrzeugreifen nach Anspruch 1, dadurch gekennzeichnet, daß im Mittelabschnitt (A) zwei durch eine entlang der Äquatorlinie verlaufende breite Umfangsnut (1') voneinander getrennte Umfangsrippen (2') vorgesehen sind.

4. Fahrzeugreifen nach einem der Ansprüche 1 bis 2, dadurch gekennzeichnet, daß der Normalabstand (w) der geschlossenen Endbereiche der geneigten Rillen (4) von der Umfangsrippenmittellinie 0,1 bis 0,3 W, insbesondere etwa 0,20 W, beträgt, wobei W die axiale Breite der Umfangsrippe (2) ist.

5. Fahrzeugreifen nach einem der Ansprüche 1 oder 3, dadurch gekennzeichnet, daß der Normalabstand (w'') der geschlossenen Endbereiche der geneigten Rillen (4') und der mittleren Umfangsnut (1') 0,2 bis 0,6 W'',insbesondere etwa 0,4 W'', beträgt, wobei W'' die Breite einer Umfangsrippe (2') ist.

6. Fahrzeugreifen nach einem der Ansprüche 1 bis 5, dadurch gekennzeichnet, daß der Normalabstand (w') zwischen den geschlossenen Endbereichen der geneigten Rillen (5, 5', 5'', 5''', 5^{IV}) und der jeweils benachbarten Umfangsnut (1, 1') in einem Bereich zwischen 0,07 und 0,3 W', insbesondere zwischen 0,09 und 0,2 W' beträgt, wobei W' die Breite der Seitenbereiche (C) ist.

7. Fahrzeugreifen nach einem der Ansprüche 1 bis 6, dadurch gekennzeichnet, daß die profilinnenseitig verlaufenden Endbereiche der in der bzw. den Umfangsrippe(n) verlaufenden geneigten Rillen (4, 4') mit der Umfangsmittellinie (M-M) Winkel (α) einschließen, die zwischen 10 und 50°, insbesondere zwischen 15 und 40° betragen.

8. Fahrzeugreifen nach einem der Ansprüche 1 bis 6, dadurch gekennzeichnet, daß die profilinnenseitig verlaufenden Endbereiche der in den Seitenbereichen (C) angeordneten geneigten Rillen (5, 5', 5'', 5''', 5^{IV}) mit der Umfangsmittellinie (M-M) Winkel (β) einschließen die, zwischen 5° und 50°, insbesondere zwischen 15° und 35°, betragen.

9. Fahrzeugreifen nach Anspruch 7 oder Anspruch 8, dadurch gekennzeichnet, daß die Winkel (α, β) der geneigten Rillen (4, 4'; 5, 5', 5'', 5''', 5^{IV}) bei ein und demselben Laufflächenprofil über den Reifenumfang variiert werden.

10. Fahrzeugreifen nach einem der Ansprüche 1 bis 9, dadurch gekennzeichnet, daß durch die Anordnung der geneigten Rillen (4, 4'; 5, 5', 5'', 5''', 5^{IV}) ein laufrichtungsgebundenes, gepfeiltes Profil gebildet wird.

11. Fahrzeugreifen nach einem der Ansprüche 1 bis 10, dadurch gekennzeichnet, daß die geneigten Rillen (4, 4'; 5, 5', 5'', 5''', 5^{IV}) mit zumindest einer Knickstelle versehen sind.

12. Fahrzeugreifen nach einem der Ansprüche 1 bis 10, dadurch gekennzeichnet, daß die geneigten Rillen (4^{IV}, 5^{IV}) einen bogenförmig gekrümmten, kontinuierlichen Verlauf aufweisen.

13. Fahrzeugreifen nach einem der Ansprüche 1 bis 12, dadurch gekennzeichnet, daß Lamellenfeineinschnitte vorgesehen sind, die zwischen benachbarten geneigten Rillen verlaufend und/oder zwischen geneigten Rillen und Umfangsnuten verlaufend angeordnet sind.

## Claims

1. Vehicle tyre, more especially a tyre of a radial type of construction, having a tread surface profile which comprises a central portion (A), which has two wide, straight circumferential grooves (1, 1') communicating with at least one circumferential rib (2, 2') axially on the inside and is defined on both sides, and two lateral regions (C), which are free of circumferential grooves, the lateral regions (C) having, as single notches, a plurality of notches (5, 5', 5'', 5''', 5^{IV}) which are inclined relative to the circumferential direction of the tyre and extend beyond the edges of the tread surface profile, said notches terminating as blind grooves axially on the inside, and notches (4, 4', 4^{IV}) also being disposed in the circumferential rib or ribs (2, 2') and being inclined relative to the circumferential direction of the tyre, which notches extend into the circumferential grooves (1, 1') axially on the outside and terminate as blind grooves axially on the inside, characterised in that the central portion (A) has a width between 30 % and 50 % of the tread strip width (B), and in that the direction of inclination of the notches (5, 5', 5'', 5''', 5^{IV}) in each lateral region (C) is identical to the direction of inclination of the notches (4, 4', 4^{IV}) in the circumferential rib (2,2') adjacent this lateral region (C).

2. Vehicle tyre according to claim 1, characterized in that a single circumferential rib (2) is disposed in the central portion (A) and is preferably provided centrally with a relatively narrow circumferential notch (3), which has a depth of up to 4 mm.

3. Vehicle tyre according to claim 1, characterized in that two circumferential ribs (2'), which are separated from each other by a wide circumferential groove (1') extending along the centre line, are provided in the central portion (A).

4. Vehicle tyre according to one of claims 1 to 2, characterized in that the normal spacing (w) between the closed end regions of the inclined notches (4) and the circumferential rib centre line is 0.1 to 0.3 W, more especially substantially 0.20 W, W being the axial width of the circumferential rib (2).

5. Vehicle tyre according to one of claims 1 or 3, characterized in that the normal spacing (w'') between the closed end regions of the inclined notches (4') and the central circumferential groove (1') is 0.2 to 0.6 W'', more especially substantially 0.4 W'', W'' being the width of a circumferential rib (2').

6. Vehicle tyre according to one of claims 1 to 5, characterized in that the normal spacing (w') between the closed end regions of the inclined notches (5, 5', 5'', 5''', 5^{IV}) and the respective adjacent circumferential groove (1, 1') lies within a range of between 0.07 and 0.3 W', more especially between 0.09 and 0.2 W', W' being the width of the lateral regions (C).

7. Vehicle tyre according to one of claims 1 to 6, characterized in that the end regions, which extend on the inside of the profile, of the inclined notches (4, 4'), which extend in the circumferential rib or ribs, form with the central circumferential line (M-M) angles (α) which amount to between 10° and 50°, more especially between 15° and 40°.

8. Vehicle tyre according to one of claims 1 to 6, characterized in that the end regions, which extend on the inside of the profile, of the inclined notches (5, 5', 5'', 5''', 5^{IV}), which are disposed in the lateral regions (C), form with the central circumferential line (M-M) angles (β) which amount to between 5° and 50°, more especially between 15° and 35°.

9. Vehicle tyre according to claim 7 or claim 8, characterized in that the angles (α, β) of the inclined notches (4, 4'; 5, 5', 5'', 5''', 5^{IV}) are varied over the tyre circumference with one and the same tread surface profile.

10. Vehicle tyre according to one of claims 1 to 9, characterized in that an arrow-shaped profile, which is adapted to the direction of travel, is formed by the disposition of the inclined notches (4, 4'; 5, 5', 5'', 5''', 5^{IV}).

11. Vehicle tyre according to one of claims 1 to 10, characterized in that the inclined notches (4, 4'; 5, 5', 5'', 5''', 5^{IV}) are provided with at least one angular portion.

12. Vehicle tyre according to one of claims 1 to 10, characterized in that the inclined notches (4^{IV}, 5^{IV}) have an arcuately curved, continuous configuration.

13. Vehicle tyre according to one of claims 1 to 12, characterized in that fine lamellar incisions are provided, which are disposed so as to extend between adjacent inclined notches and/or so as to extend between inclined notches and circumferential grooves.

## Revendications

1. Bandage pneumatique pour véhicule, notamment pneumatique de type radial comprenant une sculpture ou profil de surface de roulement qui est constituée par une section centrale (A qui présente deux gorges périphériques droites larges (1,1') auxquelles se raccorde axialement sur le côté interne au moins une nervure périphérique (2,2') et limitée des deux côtés et qui est composée de deux parties latérales (C) libres des gorges périphériques, les parties latérales (C) présentant comme nervure unique une pluralité de nervures (5, 5', 5'', 5''', 5^{IV}) s'étendant vers l'extérieur inclinées par rapport à la direction périphérique du bandage pneumatique et s'étendant sur les bords du profil de la surface de roulement, qui aboutissent axialement vers l'intérieur sous forme de rainures borgnes et étant également disposées dans la ou dans les nervures périphériques (2,2'), des rainures (4,4',4^{IV}) inclinées par rapport à la direction périphérique du bandage pneumatique, qui aboutissent axialement vers l'extérieur dans les gorges périphériques (1,1') et qui se terminent axialement vers l'intérieur sous forme de rainures borgnes, caractérisé en ce que la section centrale (A) présente une largeur entre 30 et 50% de la largeur de la surface de roulement (B) et en ce que la direction d'inclinaison des rainures (5,5',5'', 5''', 5^{IV}) coïncide dans chaque zone latérale (C) avec la direction d'inclinaison des rainures (4,4',4^{IV}) dans la nervure périphérique (2,2') avoisinant cette zone latérale (C).

2. Pneumatique pour véhicule selon la revendication 1, caractérisé en ce que dans la section centrale (A) est prévue une unique nervure périphérique (2) qui est munie de préférence en son centre d'une rainure périphérique (3) relativement étroite dont la profondeur peut atteindre 4mm.

3. Pneumatique pour véhicule selon la revendication 1, caractérisé en ce que sont prévues dans la section centrale (A) deux nervures périphériques (2') séparées l'une de l'autre par une large gorge périphérique (1') s'étendant le long de la ligne équatoriale.

4. Pneumatique pour véhicule selon l'une quelconque des revendications 1 à 2, caractérisé en ce que l'écartement normal (w') des zones d'extrémité fermées des rainures inclinées (4) par rapport à la ligne centrale de la nervure périphérique est compris entre 0,1 et 0,3 W, et est en particulier d'environ 0,20 W, W représentant la largeur axiale de la nervure périphérique.

5. Pneumatique pour véhicule selon l' une quelconque des revendications 1 ou 3, caractérisé en ce que l'écartement normal (W'') entre les zones d'extrémité fermées des rainures inclinées (4') et la gorge périphérique centrale (1') est compris entre 0,2 et 0,6 W', et est en particulier d'environ 0,4 W', W' représentant la largeur d' une nervure périphérique.

6. Pneumatique pour véhicule selon l'une quelconque des revendications 1 à 5, caractérisé en ce que l'écartement normal (W'') entre les zones d'extrémité fermées des rainures inclinées (5,5',5'', 5''',5^{IV}) et la gorge périphérique (1,1') respectivement voisine est situé dans une plage comprise entre 0,07 et 0,3 W', et en particulier entre 0,09 et 0,2 W', W' représentant la largeur des zones latérales (C).

7. Pneumatique pour véhicule selon l'une quelconque des revendications 1 à 6, caractérisé en ce que les zones d'extrémité s'étendant sur le côté interne du profil des rainures inclinées (4,4') qui s'étendent dans la ou les nervures périphériques forment avec la ligne périphérique centrale (M-M) un angle (α) compris entre 10 et 50° et en particulier entre 15 et 40°.

8. Pneumatique pour véhicule selon l'une quelconque des revendications 1 à 6, caractérisé en ce que les zones d' extrémité des rainures inclinées (5,5',5'',5''',5^{IV}) disposées dans les zones latérales et qui s'étendent vers le côté interne du profil forment avec la ligne périphérique centrale (M-M) un angle (β) compris entre 5° et 50°, et en particulier entre 15° et 35°.

9. Pneumatique pour véhicule selon la revendication 7 ou la revendication 8, caractérisé en ce que l'angle (α,β) formé par les rainures inclinées (4,4' ; 5,5',5'', 5''', 5^{IV}) varie sur la périphérie du pneumatique pour le même profil de surface de roulement.

10. Pneumatique pour véhicule selon l'une quelconque des revendications 1 à 9, caractérisé en ce qu'un profil en flèche qui est lié à la direction de la marche est formé par l'agencement des rainures inclinées (4, 4' ;5,5', 5'', 5''', 5^{IV}) .

11. Pneumatique pour véhicule selon l'une quelconque des revendications 1 à 10, caractérisé en ce que les rainures inclinées (4,4'; 5,5' ,5'', 5''',5^{IV}) sont munies d'au moins un coude.

12. Pneumatique pour véhicule selon l'une quelconque des revendications 1 à 10, caractérisé en ce que les rainures inclinées (4^{IV}, 5^{IV}) sont de forme courbe et continue.

13. Pneumatique pour véhicule selon l'une quelconque des revendications 1 à 12, caractérisé en ce que sont prévues de fines entailles lamellaires qui s'étendent entre les rainures inclinées voisines et/ou entre les rainures inclinées et les gorges périphériques.
